# EUROPÄISCHE PATENTSCHRIFT

(11) **EP 2 757 542 B1**
(45) Veröffentlichungstag und Bekanntmachung des Hinweises auf die Patenterteilung: **23.10.2019**
(21) Anmeldenummer: 14152211.0
(22) Anmeldetag: 22.01.2014
(51) Int. Cl.: G08G 1/16, B60Q 1/46

(54) **Abstandswarnvorrichtung und Verfahren zur Erhöhung der Verkehrssicherheit**
Distance warning device and method for improving road safety
Dispositif d'avertissement de distance et procédé d'augmentation de la sécurité du trafic

(30) Priorität: 22.01.2013 AT 500452013
(43) Veröffentlichungstag der Anmeldung: 23.07.2014
(73) Patentinhaber: Haidlmair, Josef, 4542 Nussbach (AT); Veigl, Michael Friedhelm, 3314 Strengberg (AT)
(72) Erfinder: Haidlmair, Josef, 4542 Nussbach (AT); Veigl, Michael Friedhelm, 3314 Strengberg (AT)
(74) Vertreter: Jell, Friedrich

(56) Entgegenhaltungen:
- EP-A1- 1 521 980
- AT-A4- 509 592
- DE-A1-102004 062 497
- DE-U1-202011 000 151

## Beschreibung

Die Erfindung betrifft eine Abstandswarnvorrichtung und ein Verfahren zur Erhöhung der Verkehrssicherheit, bei dem der rückwärtige Abstand des vorderen Fahrzeugs zu einem nachfolgend fahrenden Fahrzeugs gemessen, mit einem vorgegebenen Sicherheitsabstand verglichen und dessen Unterschreiten diesem nachfolgenden Fahrzeug angezeigt bzw. eine Warnung auf andere Weise übertragen wird, wobei Messdaten in einem Datenspeicher abgespeichert werden.

Um rückwärtigen bzw. nachfahrenden Fahrzeuge einen zu geringen Abstand anzeigen zu können, ist es aus dem Stand der Technik bekannt (DE202010013761U1 und GB2328820A), am Fahrzeug eine optische Anzeigeeinrichtung vorzusehen, die mit Signalen, beispielsweise mit Hilfe eines Blinkens der dritten Bremsleuchte, den Fahrer des rückwärtigen Fahrzeugs auf seine Verletzung der Straßenverkehrsordnung hinweist. Zu diesem Zweck wird am Fahrzeug eine Abstandsmesseinrichtung vorgesehen, die den rückwärtigen Abstand des vorderen Fahrzeugs, also des Vorderfahrzeugs, zum nachfolgenden fahrenden Fahrzeug erfasst. Die Recheneinheit der Abstandsmesseinrichtung überprüft nun kontinuierlich, ob ein Sicherheitsabstand, der sich in Abhängigkeit der Geschwindigkeit des rückwärtigen Fahrzeugs ergibt, vom gemessenen Abstand zwischen den Fahrzeugen unterschritten wird - um gegebenenfalls eine Warnung auszugeben. Zwar kann damit ein nachfolgender Fahrer von einer Verletzung des vorgeschriebenen Sicherheitsabstands gewarnt werden, nachteilig können optische Signale, insbesondere über eine Bremsleuchte, allerdings zu überhasteten bzw. unüberlegten Reaktionen des gewarnten Fahrers führen. Derartige Abstandswarnvorrichtung können daher unter bestimmten Bedingungen die Verkehrssicherheit eventuell erhöhen, auf diese jedoch auch negativen Einfluss haben. Die Merkmale des Oberbegriffs der Ansprüche 1 und 9 sind aus der DE102004062497A1 oder der DE 202011000151 U1 bekannt.

Die Erfindung hat sich daher die Aufgabe gestellt, ein Verfahren zu schaffen, das die Verkehrssicherheit mithilfe einer Abstandsmessung zwischen einem vorderen Fahrzeug und einem nachfahrenden Fahrzeug zuverlässig erhöhen kann. Zudem soll sich das Verfahren durch einfache Handhabungsbedingungen auszeichnen können.

Die Erfindung löst die gestellte Aufgabe hinsichtlich des Verfahrens durch die Merkmale des Anspruchs 1.

Wird beim Unterschreiten des Sicherheitsabstands dem nachfolgenden Fahrzeug ein optisches Signal bzw. eine Warnung ausschließlich bei Bestätigung des Fahrers des vorderen Fahrzeugs angezeigt bzw. auf andere Weise übertragen, kann je durch den Fahrer in Abhängigkeit der Situation entschieden werden, ob dieses warnende Signal der Verkehrssicherheit dienlich oder eher schädlich ist. Es ist vorstellbar, dass die Bestätigung des Fahrers nicht für jeden Einzelfall zu erfolgen hat, sondern dies durch eine einmalige Einstellung bzw. Entscheidung des Fahrers festgelegt ist oder wird. Vorteilhaft kann der Fahrer des vorderen Fahrzeugs dieses Signal auch in Abhängigkeit der Bremsleistung bzw. auch der Bremskraft seines Fahrzeugs bestätigen. Auf diese Weise kann eine zuverlässige Erhöhung der Verkehrssicherheit erreicht werden, da die Betätigung durch den Fahrer in Abhängigkeit der Fahrbahnverhältnisse, der Bremskraft seines Fahrzeugs usw. erfolgen kann. Vorteile können des Weiteren erreicht werden, indem bei Unterschreiten des Sicherheitsabstands die kontinuierlich gemessenen rückwärtigen Abstände in einem Datenschreiber des vorderen Fahrzeugs automatisch abgespeichert wird. Diese automatische Maßnahme kann nämlich genaue Ergebnissen für die Unfall- und Sicherheitsforschung zur Verfügung stellen, sowie zu einer präventiven Wirkung und damit positiven Beeinflussung des Fahrverhaltens führen. Erfindungsgemäß kann dadurch die Verkehrssicherheit zuverlässig mit vergleichsweise einfachen Handhabungsbedingungen erhöht werden.

Im Allgemeinen wird erwähnt, dass der vorgegebenen Sicherheitsabstand zumindest von Fahrgeschwindigkeit abhängig ist. Er muss mindestens so groß sein wie der Reaktionsweg und hängt von der Geschwindigkeit, dem Fahrbahnzustand, den Sichtverhältnissen, den Bremsen, den Reifen und/oder dergleichen ab.

Werden die kontinuierlich gemessenen rückwärtigen Abstände in einem Unfalldatenspeicher abgespeichert, kann die Forschung in Bezug auf Verkehrssicherheit, Unfallgefahr etc. durch eine zentrale Datenspeicherung vereinfacht werden.

Werden die im Datenschreiber des vorderen Fahrzeugs abgespeicherten rückwärtigen Abstände nach einer vorgegebenen Zeit durch neue abzuspeichernde rückwärtige Abstände überschrieben, können so Datenschutzbestimmungen eingehalten werden. Im Falle eines Unfalls kann aber dennoch zur Klärung des Hergangs auf die zuletzt abgespeicherten Werte zurückgegriffen werden. Zudem kann dadurch auch der Datenspeicher in seiner Größe klein gehalten werden, was eine kostengünstigere Konstruktion erlauben kann. Für eine technisch einfach realisierbare Speicherung der Daten ist zum Beispiel ein als Ringpuffer ausgeführter Datenspeicher vorstellbar.

Reicht eine einmalige Bestätigung des Fahrers des vorderen Fahrzeugs aus, bei allen Unterschreiten des Sicherheitsabstands dem nachfolgenden Fahrzeug optische Anzeigen bzw. andere Warnungen zu übertragen, kann dies unter Umständen den Bedienkomfort des Verfahrens erhöhen.

Ist der vorgegebene Sicherheitsabstand vom Fahrer des vorderen Fahrzeugs in der Größe einstellbar, kann so auf Umweltbedingung eingegangen werden, die von den zur Verfügung stehenden Sensoren nicht erfasst werden. So kann ein durch neue Reifen aller Wahrscheinlichkeit nach verkürzter Bremsweg in Betracht gezogen werden und der vorgegebene Sicherheitsabstand dementsprechend angepasst werden.

Wird zur Berechnung des vorgegebenen Sicherheitsabstands die Bremskraft des vorderen Fahrzeugs berücksichtigt, kann in das Verfahren vorteilhaft einfließen, welche Bremsen das vordere Fahrzeug zur Verringerung bzw. Begrenzung seiner Geschwindigkeit verfügt bzw. in welchem Ausmaß dieser Bremsen eingesetzt werden. Beispielsweise kann so eine Berücksichtigung von Bremsen, die zusätzlich zu den üblicherweise vorhandenen Scheibenbremsen eingesetzt werden, erfolgen - etwa einer Bremsplatte. Einem Fahrer eines rückwärtigen Fahrzeugs kann so vermittelt werden, dass ein von diesem eingehaltener Sicherheitsabstand, der üblicherweise ausreichend groß ist, aufgrund besonderer Bremswirkung des vorderen Fahrzeugs eventuell zu gering ist. Die Verkehrssicherheit kann auf diese Weise erheblich erhöht werden.

Weiter verbessert werden kann dieses Verfahren, wenn die Bremskraft des vorderen Fahrzeugs aus Messdaten ermittelt wird. So ist vorstellbar bei jeder Vollbremsung die Geschwindigkeitsänderung und den dafür benötigten Weg zu erfassen und daraus die Bremskraft zu bestimmen. Wird die maximale Bremskraft bei verschieden Witterungsverhältnissen aufgezeichnet, daraus der Maximalwert bestimmt und für die Berechnung des vorgegebenen Sicherheitsabstands in Betracht gezogen, kann von einem Sicherheitsabstand ausreichender Größe ausgegangen werden. Zudem ist ein Kalibrierungsmodus für das Verfahren vorstellbar, bei dem der Fahrer mehrere Bremsungen durchführen kann, um so die Bremskraft des Fahrzeugs zu bestimmen.

Eine Rekonstruktion eines Fahrverhalten kann umfassender ermöglicht werden, wenn zusätzlich zum rückwertigen Abstand auch der vordere Abstand zu einem vorfahrenden Fahrzeug kontinuierlich gemessen wird und gemeinsam mit den rückwertigen Abständen im Datenschreiber abgespeichert werden. Dies kann ins besondere für Versicherungszwecke vorteilhaft sein.

Die Erfindung hat sich außerdem die Aufgabe gestellt, eine eingangs geschilderte Abstandswarnvorrichtung konstruktiv zu vereinfachen und damit zuverlässig die Verkehrssicherheit zu erhöhen.

Die Erfindung löst die gestellte Aufgabe hinsichtlich der Abstandswarnvorrichtung durch die Merkmale des Anspruchs 9.

Weist die Abstandswarnvorrichtung eine Schalteinrichtung auf, wobei bei Unterschreiten des Sicherheitsabstands die Recheneinheit mit dem Datenschreiber zum Speichern der kontinuierlich gemessenen rückwärtigen Abstände verbunden werden kann, kann eine Erhöhung der Verkehrssicherheit ermöglicht werden. Die Abstandswarnvorrichtung kann nämlich durch den Datenschreiber genaue Ergebnissen für die Unfall- und Sicherheitsforschung zur Verfügung stellen - dies kann in Hinblick auf eine präventive Wirkung und damit positive Beeinflussung des Fahrverhaltens genutzt werden. Zudem kann die Schalteinrichtung der Abstandswarnvorrichtung genutzt werden, den Fahrer eines nachfolgenden Fahrzeugs den Fahrumständen entsprechend bei einem Unterschreiten seines Sicherheitsabstands zu warnen, indem die Recheneinheit in Abhängigkeit einer Benutzereingabe an der Schalteinrichtung mit der Warneinrichtung zur Übertragung einer Warnung, insbesondere eines optischen Signals, an das nachfolgende Fahrzeug verbunden ist. Eine konstruktiv einfache und zuverlässige Abstandswarnvorrichtung kann damit geschaffen werden, die zur Erhöhung der Verkehrssicherheit beitragen kann.

Die Konstruktion der Abstandswarnvorrichtung kann noch weiter vereinfacht werden, wenn der Datenschreiber als Unfalldatenspeicher ausgebildet ist.

Berechnet die Recheneinheit in Abhängigkeit der Bremskraft des vorderen Fahrzeugs den Sicherheitsabstand, kann in das Verfahren vorteilhaft einfließen, welche Bremsen das vordere Fahrzeug zur Verringerung bzw. Begrenzung seiner Geschwindigkeit verfügt bzw. in welchem Ausmaß dieser Bremsen eingesetzt werden. Beispielsweise kann so eine Berücksichtigung von Bremsen, die zusätzlich zu den üblicherweise vorhandenen Scheibenbremsen eingesetzt werden, erfolgen - etwa einer Bremsplatte. Einem Fahrer eines rückwärtigen Fahrzeugs kann so vermittelt werden, dass ein von diesem eingehaltener Sicherheitsabstand, der üblicherweise ausreichend groß ist, aufgrund besonderer Bremswirkung des vorderen Fahrzeugs eventuell zu gering ist. Die Verkehrssicherheit kann auf diese Weise erheblich erhöht werden.

Weist die Warneinrichtung einen mit einem Empfänger am nachfolgenden Fahrzeug koppelbaren Sender zum Übertragen der Warnung auf, kann die Übertragung der Warnung sicher an das nachfolgende Fahrzeug erfolgen.

Ist das Fahrzeug mit einer Abstandswarnvorrichtung und mit einer parallel zu den Radbremsen wirkenden, zusätzlichen Bremseinrichtung ausgerüstet, können kurze Bremswege erreicht werden, und dem nachfolgenden Fahrzeug der notwendige und aufgrund der zusätzlichen Bremseinrichtung erhöhte Sicherheitsabstand angezeigt werden. Dies kann eine erhebliche Erhöhung der Verkehrssicherheit bewirken.

Bildet eine an der Fahrzeugunterseite angeordnete, von einer Ruhelage in eine Bremslage auf der Fahrbahnoberfläche bewegliche Bremsplatte die zusätzliche Bremseinrichtung aus, kann durch die Abstandswarnvorrichtung die Verkehrssicherheit nochmals erhöht werden. Gerade bei den durch die Bremsplatte erreichbaren, stark verkürzten Bremswegen, können durch eine rechtzeitige Signalisierung des Unterschreitens des Sicherheitsabstands mögliche Auffahrunfälle vermieden werden.

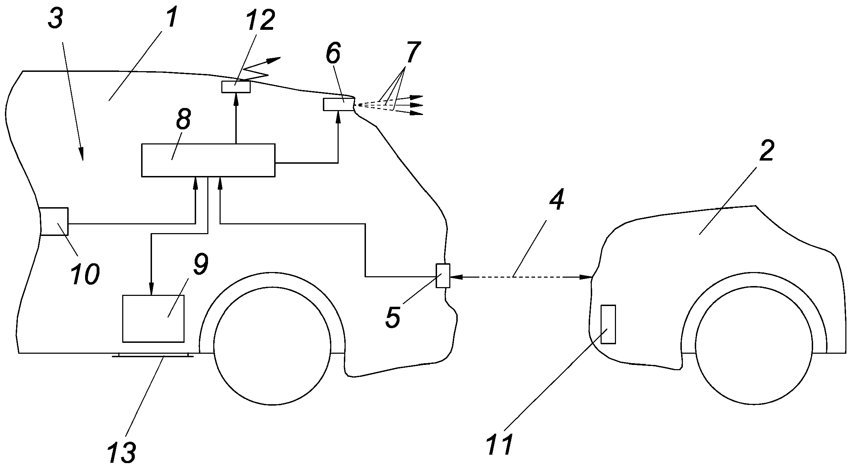

In der Figur ist beispielsweise der Erfindungsgegenstand anhand eines Ausführungsbeispiels in einer schematischen Ansicht näher dargestellt.

Nach der Figur wird ein vorderes Fahrzeug, also ein Vorderfahrzeug, 1 und ein nachfolgend fahrenden Fahrzeug 2 gezeigt. Das Vorderfahrzeug 1 weist eine Abstandswarnvorrichtung 3 auf, die kontinuierlich den Abstand 4 zwischen dem vorderes Fahrzeug 1 und dem nachfolgenden Fahrzeug 2 erfasst. Zu diesem Zweck ist am Heck des vorderen Fahrzeugs 1 eine Abstandsmesseinrichtung 5 vorgesehen, die beispielsweise Radarsignale aussendet und über die reflektierte Radarwelle den Abstand 4 berechnet. Solche eine Abstandsmesseinrichtung 5 bzw. solche Abstandssensoren sind bereits für einen Abstandsregeltempomat aus dem Stand der Technik bekannt. Zudem weist das vordere Fahrzeug 1 eine Anzeigeeinrichtung 6 auf, die beispielsweise als mittleres Bremslicht 6 optische Signale 7 an den nicht näher dargestellten Fahrer des nachfolgenden Fahrzeugs 2 senden kann. Der Abstandswarnvorrichtung 3 ist zudem eine Recheneinheit 8 gemein, die mit der Abstandsmesseinrichtung 5 zum Empfang der Abstandsmessdaten sowie mit der Anzeigeeinrichtung 6 zu deren Ansteuerung verbunden ist.

Erfindungsgemäß weist die Abstandswarnvorrichtung 3 auch einen Datenschreiber 9 und eine Schalteinrichtung 10 auf. Über die Schalteinrichtung 10 kann ein Benutzer die Ausgabe von optischen Signalen 7 unterbinden, die auf eine Verletzung des Sicherheitsabstands zwischen den beiden Fahrzeugen 1 und 2 zurückzuführen ist. Bei einem Unterschreiten des Sicherheitsabstands verbindet nämlich die Recheneinheit 8 ausschließlich in Abhängigkeit einer bejahenden Benutzereingabe an der Schalteinrichtung 10 mit der Anzeigeeinrichtung 6 zur Ausgabe des optischen Signals 7. Wird solch ein optisches Signal 7 nicht gewünscht, kann dies also über die Schalteinrichtung 10 der Recheneinheit 8 vorgegeben werden. Eine Anpassung an die gegebenen Straßenverhältnisse ist damit vom Fahrer des vorderen Fahrzeugs 1 möglich. Der vorgegebene Sicherheitsabstand wird aber auch kontinuierlich in Abhängigkeit der Bremskraft des vorderen Fahrzeugs 1 berechnet - so kann dieser auch in Abhängigkeit der Bremskraft des vorderes Fahrzeugs 1, je nachdem über welche Bremseinrichtung dieses verfügt bzw. welche gerade aktiviert sind, berechnet werden. Dies hat erhebliche Vorteile hinsichtlich der Verkehrssicherheit, da ein nachfolgendes Fahrzeug 2 klarerweise von den üblicherweise einzuhaltenden Sicherheitsabständen ausgeht, wenn hintereinander fahrende Fahrzeuge über die gleichen Bremsvoraussetzungen verfügen.

Die Bremskraft des vorderen Fahrzeugs 1 kann dazu aus Messdaten ermittelt werden. Durch Aufzeichnung von Geschwindigkeitsänderung und Weg - Messwerte, die bei jedem Fahrzeug ohnehin erfasst werden - bei jeder Bremsung, insbesondere Vollbremsung, kann die Bremskraft bestimmt werden. Der Maximalwert der ermittelten Bremskraft über mehrere Bremsungen ergibt dann einen einen voraussichtlich kürzest möglichen Bremsweg des vorderen Fahrzeugs 1 der bei der Berechnung des vorgegebenen Sicherheitsabstands des hinteren Fahrzeugs 2 zu berücksichtigen ist. Natürlich ist es auch denkbar, die Bremskraft im Zuge einer Kalibrierung der Abstandswarnvorrichtung einzugeben bzw. zu ermitteln. So können bei der behördlich vorgeschriebenen Fahrzeugüberprüfung ermittelte Werte für die Bremskraft für die Abstandswarnvorrichtung verwendet werden, aber auch die Durchführung einer geplanten Vollbremsung zur Ermittlung der Bremskraft ist möglich.

Zudem werden beim Unterschreiten des Sicherheitsabstands von der Recheneinheit 8 die kontinuierlich gemessenen rückwärtigen Abstände 4 in einem Datenschreiber 9 automatisch gespeichert, indem die Recheneinheit 8 mit diesem als Unfalldatenspeicher ausgebildeten Datenschreiber 9 verbindet. Diese automatische Maßnahme erhöht die Genauigkeit der Ergebnisse für die Unfall- und Sicherheitsforschung sowie führt zu einer positiven Beeinflussung des Fahrverhaltens, was die Verkehrssicherheit erhöht.

Neben einem optischen Signal besteht auch die Möglichkeit die Übertragung der Warnung auf elektronischem Weg durchzuführen. Dazu wird der Sender 12 am vorderen Fahrzeug 1 mit dem Empfänger 11 am nachfolgenden Fahrzeug 2 gekoppelt. Erfolgt nun eine Übertragung der Warnung an den Empfänger 11, kann dieser die Warnung im nachfolgenden Fahrzeug dem Fahrer zur Kenntnis bringen. Dies kann über eine nicht näher dargestellte Anzeige im Armaturenbrett erfolgen aber auch eine akustische Signalgebung ist denkbar.

In dem dargestellten Ausführungsbeispiel der Erfindung ist das vordere Fahrzeug 1 mit einer Bremsplatte 13 ausgerüstet. Dementsprechend ist eine Berücksichtigung der Bremskraft zur Berechnung des vorgegebenen Sicherheitsabstands von entscheidendem Vorteil, da durch die Bremsplatte 13 der Bremsweg stark vom zu erwartenden Bremsweg ohne Bremsplatte 13 abweicht. Ohne diese Berücksichtigung der Bremskraft würde ein nachfolgendes Fahrzeug 2 einen zu geringen Sicherheitsabstand einhalten. Eine erhöhte Sicherheit im Verkehr kann so durch die Abstandswarnvorrichtung erreicht werden.

Im Allgemeinen wird erwähnt, dass der Sicherheitsabstand den Reaktionsweg umfasst und von der Geschwindigkeit, dem Fahrbahnzustand, den Sichtverhältnissen, den Bremsen, den Reifen etc. des nachfolgenden Fahrzeugs 2 abhängt. Vorteilhaft wird zur Ermittlung des Sicherheitsabstands die Geschwindigkeit des nachfolgenden Fahrzeugs 2 mit Hilfe der Abstandsmesseinrichtung 5 zusätzlich ermittelt und der Recheneinheit 8 zur Verfügung gestellt, um daraus den Sicherheitsabstand zu ermitteln. Es ist aber auch vorstellbar, über die Geschwindigkeit des vorderen Fahrzeugs 1 eine Abschätzung zum Sicherheitsabstand bzw. Mindestabstand des nachfolgenden Fahrzeugs 2 durchzuführen bzw. einen Sicherheitsabstand in einem nicht näher dargestellten Speicher der Recheneinrichtung 8 abzuspeichern. Aus Datenschutzgründen ist es natürlich denkbar diesen Speicher in regelmäßigen Abständen zu überschreiben.

In der Figur wurde nicht dargestellt, dass auch zusätzlich zum rückwertigen Abstand 4 auch der vordere Abstand zu einem vorfahrenden Fahrzeug kontinuierlich gemessen wird und diese vorderen Abstände gemeinsam mit den rückwertigen Abständen 4 im Datenschreiber 9 abgespeichert werden. Dies wird jedoch auf dieselbe Art und Weise konstruktiv gelöst, wie dies zu den rückwertigen Abständen 4 gemäß der Figur gezeigt wird.

## Patentansprüche

1. Verfahren zur Erhöhung der Verkehrssicherheit, bei dem der rückwärtige Abstand (4) eines Fahrzeugs (1) zu einem nachfolgend fahrenden Fahrzeug (2) gemessen, mit einem vorgegebenen Sicherheitsabstand verglichen und dessen Unterschreiten diesem nachfolgenden Fahrzeug (2) angezeigt bzw. eine Warnung auf andere Weise übertragen wird, wobei Messdaten zu den kontinuierlich gemessenen rückwärtigen Abständen (4) in einem Datenschreiber (9) des Fahrzeugs (1) abgespeichert werden, **dadurch gekennzeichnet, dass** bei Unterschreiten des Sicherheitsabstands einerseits dem nachfolgenden Fahrzeug (2) ein optisches Signal (7) angezeigt bzw. eine Warnung auf andere Weise übertragen wird, und zwar ausschließlich bei Bestätigung des Fahrers des vorderen Fahrzeugs (1), und andererseits die kontinuierlich gemessenen rückwärtigen Abstände (4) in einem Datenschreiber (9) des vorderen Fahrzeugs (1) automatisch abgespeichert werden.

2. Verfahren nach Anspruch 1, **dadurch gekennzeichnet, dass** die kontinuierlich gemessenen rückwärtigen Abstände (4) in einem als Unfalldatenspeicher ausgebildeten Datenschreiber (9) abgespeichert werden.

3. Verfahren nach Anspruch 1 oder 2, **dadurch gekennzeichnet, dass** die im Datenschreiber (9) des Fahrzeugs (1) abgespeicherten rückwärtigen Abstände (4) nach einer vorgegebenen Zeit durch neue abzuspeichernde rückwärtige Abstände (4) überschrieben werden.

4. Verfahren nach Anspruch 1, 2 oder 3, **dadurch gekennzeichnet, dass** eine einmalige Bestätigung des Fahrers des Fahrzeugs (1) ausreicht, bei allen Unterschreiten des Sicherheitsabstands dem nachfolgenden Fahrzeug (2) optische Anzeigen bzw. andere Warnungen zu übertragen.

5. Verfahren nach einem der Ansprüche 1 bis 4, **dadurch gekennzeichnet, dass** der vorgegebene Sicherheitsabstand vom Fahrer des Fahrzeugs (1) in der Größe einstellbar ist.

6. Verfahren nach einem der Ansprüche 1 bis 5, **dadurch gekennzeichnet, dass** zur Berechnung des vorgegebenen Sicherheitsabstands die Bremskraft des Fahrzeugs (1) berücksichtigt wird.

7. Verfahren nach Anspruch 6, **dadurch gekennzeichnet, dass** die Bremskraft des Fahrzeugs (1) aus Messdaten ermittelt wird.

8. Verfahren nach einem der Ansprüche 1 bis 7, **dadurch gekennzeichnet, dass** zusätzlich zum rückwertigen Abstand (4) auch der vordere Abstand zu einem vorfahrenden Fahrzeug kontinuierlich gemessen wird und gemeinsam mit den rückwertigen Abständen (4) im Datenschreiber (9) abgespeichert werden.

9. Abstandswarnvorrichtung für ein Fahrzeug (1) mit einer Anzeigeeinrichtung (6), mit einer Abstandsmesseinrichtung (5) zum Erfassen mindestens eines rückwärtigen Abstands (4) des Fahrzeugs (1) zu einem nachfolgend fahrenden Fahrzeug (2) mit einer mit der Warneinrichtung (6), insbesondere einer Anzeigeeinrichtung, mit einem Datenschreiber (9) zum Speichern der kontinuierlich gemessenen rückwärtigen Abstände (4) und mit einer mit der Abstandsmesseinrichtung (5) verbundenen Recheneinheit (8) zur Überprüfung des von der Abstandsmesseinrichtung (5) gemessenen Abstands (4) mit einem Sicherheitsabstand, **dadurch gekennzeichnet, dass** die Abstandswarnvorrichtung (3) eine Schalteinrichtung (10) aufweist, wobei bei Unterschreiten des Sicherheitsabstands die Recheneinheit (8) mit dem Datenschreiber (9) zum automatischen Speichern der kontinuierlich gemessenen rückwärtigen Abstände (4) sowie in Abhängigkeit einer bejahenden Benutzereingabe an der Schalteinrichtung (10) mit der Warneinrichtung (6) zur Übertragung einer Warnung, insbesondere eines optischen Signals (7), an das nachfolgende Fahrzeug (2) verbunden ist.

10. Abstandswarnvorrichtung nach Anspruch 9, **dadurch gekennzeichnet, dass** der Datenschreiber (9) als Unfalldatenspeicher ausgebildet ist.

11. Abstandswarnvorrichtung nach Anspruch 9 oder 10, **dadurch gekennzeichnet, dass** die Recheneinheit in Abhängigkeit der Bremskraft des vorderen Fahrzeugs (1) den Sicherheitsabstand berechnet.

12. Abstandswarnvorrichtung nach Anspruch 9, 10 oder 11, **dadurch gekennzeichnet, dass** die Warneinrichtung einen mit einem Empfänger am nachfolgenden Fahrzeug koppelbaren Sender zum Übertragen der Warnung aufweist.

13. Fahrzeug mit einer Abstandswarnvorrichtung nach einem der Ansprüche 9 bis 12 und mit einer parallel zu den Radbremsen wirkenden, zusätzlichen Bremseinrichtung.

14. Fahrzeug nach Anspruch 13, **dadurch gekennzeichnet, dass** eine an der Fahrzeugunterseite angeordnete, von einer Ruhelage in eine Bremslage auf der Fahrbahnoberfläche bewegliche Bremsplatte die zusätzliche Bremseinrichtung ausbildet.

## Claims

1. A method for increasing traffic safety, wherein the rearward distance (4) of a vehicle (1) to a subsequent driving vehicle (2) is measured, compared with a predetermined safety distance, and its falling below is displayed this subsequent vehicle (2) or a warning is transmitted in another way, wherein measurement data to the continuously measured rearward distances (4) are stored in a data recorder (9) of the vehicle (1), **characterized in that**, if the safety distance falls below, on the one hand an optical signal (7) is displayed to the following vehicle (2) or a warning is transmitted in another manner, exclusively upon confirmation of the driver of the front vehicle (1), and on the other hand the continuously measured rearward distances (4) are automatically stored in a data recorder (9) of the front vehicle (1).

2. Method according to claim 1, **characterized in that** the continuously measured rearward distances (4) are stored in a data recorder (9) designed as an accident data memory.

3. Method according to claim 1 or 2, **characterized in that** the rearward distances (4) stored in the data recorder (9) of the vehicle (1) are overwritten after a predetermined time by new rearward distances (4) to be stored.

4. Method according to claim 1, 2 or 3, **characterized in that** a single confirmation by the driver of the vehicle (1) is sufficient to transmit optical indications or other warnings to the subsequent vehicle (2) at all times when the safety distance falls below.

5. Method according to one of the claims 1 to 4, **characterized in that** the predetermined safety distance is adjustable in size by the driver of the vehicle (1).

6. Method according to one of the claims 1 to 5, **characterized in that** the braking force of the vehicle (1) is taken into account in order to calculate the predetermined safety distance.

7. Method according to claim 6, **characterized in that** the braking force of the vehicle (1) is determined from measurement data.

8. Method according to one of the claims 1 to 7, **characterized in that**, in addition to the rearward distance (4), the front distance to a preceding vehicle is also measured continuously and is stored together with the rearward distances (4) in the data recorder (9).

9. Distance warning device for a vehicle (1) having a display device (6), having a distance measuring device (5) for detecting at least one rearward distance (4) of the vehicle (1) to a subsequently driving vehicle (2) having a connected to the warning device (6), more particularly a display device, with a data recorder (9) for storing the continuously measured rearward distances (4) and with a computing unit (8) connected to the distance measuring device (5) for checking the distance (4) measured by the distance measuring device (5) with a safety distance, **characterized in that** the distance warning device (3) has a switching device (10), the computing unit (8) being connected to the data recorder (9) for automatically storing the continuously measured rearward distances (4) when falling below the safety distance, the computing unit (8) is connected with the data recorder (9) for automatically storing the continuously measured rearward distances (4) as well as in response to an affirmative user input to the switching device (10) with the warning device (6) for transmitting a warning, more particularly an optical signal (7) to the subsequent vehicle (2).

10. Distance warning device according to claim 9, **characterized in that** the data recorder (9) is designed as an accident data memory.

11. Distance warning device according to claim 9 or 10, **characterized in that** the computing unit calculates the safety distance as a function of the braking force of the front vehicle (1).

12. Distance warning device according to claim 9, 10 or 11, **characterized in that** the warning device has a transmitter, which can be coupled to a receiver on the subsequent vehicle, for transmitting the warning.

13. Vehicle with a distance warning device according to one of claims 9 to 12 and with an additional braking device, parallel acting to the wheel brakes.

14. Vehicle according to claim 13, **characterized in that** a brake plate, arranged on the vehicle underside, movable from a rest position to a braking position on the road surface, forms the additional braking device.

## Revendications

1. Procédé pour augmenter la sécurité routière, dans lequel on mesure la distance arrière (4) d'un véhicule (1) à un véhicule à conduire ultérieur (2), par rapport à une distance de sécurité prédéterminée, et on affiche sa chute en dessous de ce véhicule suivant, une clé (2) ou un avertissement est transmis d'une autre manière, les données de mesure étant enregistrées dans un enregistreur de données (9) du véhicule (1) aux distances arrière mesurées en continu (4), **caractérisées en ce que**, si la distance de sécurité chute en dessous, d'une part, un signal optique (7) est affiché sur le véhicule suivant (2) ou un avertissement est transmis d'une autre manière, exclusivement après confirmation du conducteur du véhicule avant (1), et d'autre part, le Les distances vers l'arrière mesurées en continu (4) sont automatiquement mémorisées dans un enregistreur de données (9) du véhicule avant (1).

2. Procédé selon la revendication 1, **caractérisé en ce que** les distances arrière (4) mesurées en continu sont mémorisées dans un enregistreur de données (9) conçu comme une mémoire de données d'accident.

3. Procédé selon la revendication 1 ou 2, **caractérisé en ce que** les distances arrière (4) mémorisées dans l'enregistreur de données (9) du véhicule (1) sont écrasées après un temps prédéterminé par de nouvelles distances arrière (4) à mémoriser.

4. Procédé selon la revendication 1, 2 ou 3, **caractérisé en ce qu'**une seule confirmation par le conducteur du véhicule (1) suffit pour transmettre des indications optiques ou autres avertissements au véhicule suivant (2) à tout moment lorsque la distance de sécurité devient inférieure.

5. Procédé selon l'une des revendications 1 à 4, **caractérisé en ce que** la distance de sécurité prédéterminée est réglable en taille par le conducteur du véhicule (1).

6. Procédé selon l'une des revendications 1 à 5, **caractérisé en ce que** la force de freinage du véhicule (1) est prise en compte pour calculer la distance de sécurité prédéterminée.

7. Procédé selon la revendication 6, **caractérisé en ce que** la force de freinage du véhicule (1) est déterminée à partir de données de mesure.

8. Procédé selon l'une des revendications 1 à 7, **caractérisé en ce que**, en plus de la distance arrière (4), la distance avant à un véhicule précédent est également mesurée en continu et est enregistrée avec les distances arrière (4) dans l'enregistreur de données (9).

9. Dispositif d'avertissement de distance pour un véhicule (1) comportant un dispositif d'affichage (6), un dispositif de mesure de distance (5) pour détecter au moins une distance arrière (4) du véhicule (1) par rapport à un véhicule (2) conduisant ensuite, relié au dispositif d'avertissement (6), en particulier un dispositif d'affichage, avec un enregistreur de données (9) pour enregistrer les distances arrière (4) mesurées continuellement et avec une unité informatique (8) connectée au dispositif de mesure de distance (5) pour contrôler avec une distance de sécurité la distance (4) mesurée par le dispositif de mesure de distance (5), **caractérisé en ce que** le dispositif d'avertissement de distance (3) comporte un dispositif de commutation (10), l'unité de calcul (8) étant reliée à l'enregistreur de données (9) pour mémoriser automatiquement les distances arrière mesurées en continu (4) lorsque la distance de sécurité est inférieure, l'unité de calcul (8) est reliée à l'enregistreur de données (9) pour enregistrer automatiquement les distances arrière mesurées en continu (4) ainsi que pour transmettre un avertissement, en particulier un signal optique (7) au véhicule suivant (2), par une intervention positive d'utilisateur au dispositif de commutation (10), en réaction à l'actionnement par l'appareil d'avertissement (6), en particulier par l'envoi par l'intermédiaire de l'afficheur de l'unité de calcul (8).

10. Dispositif d'avertissement de distance selon la revendication 9, **caractérisé en ce que** l'enregistreur de données (9) est conçu comme une mémoire de données d'accident.

11. Dispositif avertisseur de distance selon la revendication 9 ou 10, **caractérisé en ce que** l'unité de calcul calcule la distance de sécurité en fonction de la force de freinage du véhicule avant (1).

12. Dispositif d'avertissement de distance selon la revendication 9, 10 ou 11, **caractérisé en ce que** le dispositif d'avertissement comporte un émetteur, qui peut être couplé à un récepteur sur le véhicule suivant, pour transmettre l'avertissement.

13. Véhicule avec un dispositif d'avertissement de distance selon l'une des revendications 9 à 12 et avec un dispositif de freinage supplémentaire, agissant parallèlement aux freins de roue.

14. Véhicule selon la revendication 13, **caractérisé en ce qu'**une plaque de frein, disposée sur la face inférieure du véhicule, mobile d'une position de repos à une position de freinage sur la chaussée, constitue le dispositif de freinage supplémentaire.
